Europäisches Patentamt

European Patent Office

Office européen des brevets

(19)

(11) Veröffentlichungsnummer: **0 144 794**
**A2**

(12) # EUROPÄISCHE PATENTANMELDUNG

(21) Anmeldenummer: **84113514.8**

(22) Anmeldetag: **09.11.84**

(51) Int. Cl.⁴: **H 04 M 7/14**
**H 04 Q 1/44**

(30) Priorität: **02.12.83 DE 3343646**

(43) Veröffentlichungstag der Anmeldung:
**19.06.85 Patentblatt 85/25**

(84) Benannte Vertragsstaaten:
**AT DE NL**

(71) Anmelder: **International Standard Electric Corporation**
**320 Park Avenue**
**New York New York 10022(US)**

(84) Benannte Vertragsstaaten:
**NL AT**

(71) Anmelder: **Standard Elektrik Lorenz Aktiengesellschaft**
**Hellmuth-Hirth-Strasse 42**
**D-7000 Stuttgart 40(DE)**

(84) Benannte Vertragsstaaten:
**DE**

(72) Erfinder: **Eberspächer, Karl-Heinz**
**Im Gehren 56**
**D-7300 Esslingen(DE)**

(74) Vertreter: **Villinger, Bernhard, Dipl.-Ing. et al,**
**Standard Elektrik Lorenz AG Patent- und Lizenzwesen**
**Postfach 300 929 Kurze Strasse 8**
**D-7000 Stuttgart 30(DE)**

(54) Schaltungsanordnung zum Erkennen und Auswerten von Wechselspannungssignalen auf Amtsadern.

(57) Schaltungsanordnung zum Erkennen und Auswerten von Wechselspannungssignalen auf Amtsadern, dadurch gekennzeichnet, daß sie ein an die a-Ader und die b-Ader einer Amtsleitung (AL) angeschlossenes getaktetes Bandpaßfilter (BP) aufweist, daß das Bandpaßfilter (BP) über eine Taktleitung (TL) mit einem programmierbaren Taktgenerator (TG) und über eine Signalleitung (SL) mit einem Analog-Digital-Wandler (AD) verbunden ist, und daß der Analog-Digital-Wandler (AD) und der Taktgenerator (TG) über einen Adressen- und Datenbus (ADB) an eine digitale Auswerteschaltung (DAS) gekoppelt sind.

./...

Fig.1

K.-H.Eberspächer-1

Schaltungsanordnung zum Erkennen und Auswerten von
Wechselspannungssignalen auf Amtsadern

Die Erfindung betrifft eine Schaltungsanordnung zum Erkennen und Auswerten von Wechselspannungssignalen auf Amtsadern, insbesondere für Fernsprechnebenstellenanlagen mit
einer Durchwahlamtsübertragung.

Es ist bereits eine Schaltungsanordnung bekannt (DE-OS
27 34 378), in welcher ebenfalls eine Auswertung von Wechselspannungssignalen für eine Durchwahlamtsübertragung in
Fernmeldeanlagen, insbesondere Fernsprech-Nebenstellenanlagen erfolgt. Hierzu ist je ein (in Dünnfilm-Hybridtechnik
erstellbares) RC-Filter für die unterschiedlichen Wechselspannungssignale vorzusehen, deren Ausgangssignale mit Hilfe
einer analogen Vergleicherschaltung ausgewertet werden.

Diese Schaltungsanordnung hat jedoch den Nachteil, daß aufgrund der verschiedenen Frequenzen der Wechselspannungssignale eine Vielzahl von RC-Filtern eingesetzt werden müssen.
Ferner werden die Vergleichsspannungen für die Auswerteschaltung, durch die Hardware bedingt, fest vorgegeben, so daß
jeweils ein Eingriff in die Hardware nötig ist, damit ver-

K.-H.Eberspächer-1

schiedene Wechselspannungssignale ausgewertet werden
können.

Die technische Aufgabe der Schaltungsanordnung  nach der
Erfindung besteht darin, Wechselspannungssignale auf Amtsadern, insbesondere bei Fernsprech-Nebenstellenanlagen
mit einer Durchwahlamtsübertragung, zu erkennen und auszuwerten.

Eine erfindungsgemäße Schaltungsanordnung der eingangs genannten Art ist dadurch gekennzeichnet, daß sie ein an die
a-Ader und die b-Ader einer Amtsleitung angeschlossenes
getaktetes Bandpaßfilter aufweist, daß das Bandpaßfilter
über eine Taktleitung mit einem programmierbaren Taktgenerator und über eine Signalleitung mit einem Analog-Digital-
Wandler verbunden ist, und daß der Analog-Digital-Wandler
und der Taktgenerator über einen Adressen- und Datenbus an
eine digitale Auswerteschaltung gekoppelt sind.

Ein Vorteil der Erfindung liegt insbesondere darin, daß ein
einziges Bandpaßfilter zum Erkennen der unterschiedlichen
Frequenzen der Wechselspannungssignale ausreichend ist.
Außerdem wird es durch die Verwendung einer digitalen Auswerteschaltung ermöglicht, einen variablen dem zu erwartenden Wechselspannungssignal entsprechenden Software-Spannungspegel zur Auswertung heranzuziehen.

Weitere vorteilhafte Ausbildungen des Gegenstandes der
Erfindung sind den Unteransprüchen zu entnehmen. Zwei Ausführungsbeispiele werden im folgenden anhand der Zeichnungen
weiter erläutert.

K.-H.Eberspächer-1

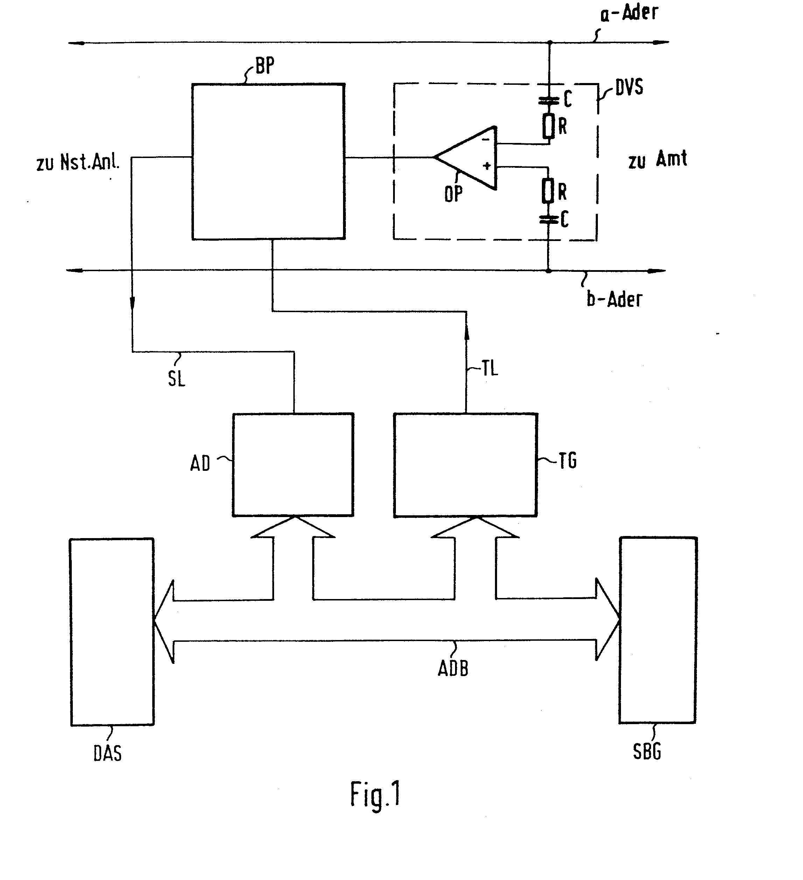

In der Figur 1 ist eine erfindungsgemäße Schaltungsanordnung zum Erkennen und Auswerten von Wechselspannungssignalen auf Amtsadern dargestellt.

Zwischen einer aus einer a-Ader und einer b-Ader bestehenden Amtsleitung AL, die an eine hier nicht näher beschriebene Nebenstellenanlage NstAnl angeschlossen ist, und
einem getakteten Bandpaßfilter BP ist eine Differenzverstärkerschaltung DVS geschaltet. Die Differenzverstärkerschaltung DVS besteht aus einem Operationsverstärker OP,
dessen invertierender Eingang über eine erste RC-Reihenschaltung R, C mit der a-Ader und dessen nichtinvertierender Eingang über eine zweite RC-Reihenschaltung R, C mit
der b-Ader der Amtsleitung AL verbunden ist. Der Eingang
des als getaktetes Bandpaßfilter BP ausgelegten Schalter-
Kondensator-Filters ist an den Ausgang des Operationsverstärkers OP angeschlossen. Weiterhin ist das Bandpaßfilter BP durch eine Taktleitung TL mit einem programmierbaren Taktgenerator TG und durch eine Signalleitung SL mit
einem Analog-Digital-Wandler AD verschaltet. Eine digitale
Auswerteschaltung DAS wird über einen Adressen-Datenbus
ADB an den Analog-Digital-Wandler AD, den Taktgenerator TG,
sowie an weitere hier nicht weiter gezeigte Schaltungsbaugruppen SBG einer Durchwahlamtsübertragung gekoppelt. Die
digitale Auswerteschaltung DAS wird durch einen Mikrorechner mit dazugehörigem Programm-, Daten- und Adressenspeicher realisiert.

Ausgehend von einem Ruhezustand der Durchwahlamtsübertragung wird zunächst der Fall der ankommenden Belegung und
dann der Fall der abgehenden Belegung der Durchwahlamtsübertragung behandelt.

K.-H.Eberspächer-1

Das Merkmal einer ankommenden Belegung - Stromerhöhung auf der b-Ader - wird von einer Schaltungsbaugruppe SBG der Durchwahlamtsübertragung erkannt und über den gemeinsamen Adressen- und Datenbus ADB der digitalen Auswerteschaltung DAS übermittelt. Diese steuert den Taktgenerator TG über den Adressen- und Datenbus ADB an, welcher den notwendigen Takt über die Taktleitung TL an das Bandpaßfilter BP anlegt, womit erreicht wird, daß das Bandpaßfilter BP auf die gewünschte Mittenfrequenz (ankommende Belegung: 50 Hz) abgestimmt wird. Im Falle der Auslösung der Gesprächsverbindung kann dann das vom Amt gesendete Wechselspannungssignal (50 Hz) über die Signalstrecke Differenzverstärkerschaltung DVS, Bandpaßfilter BP, Signalleitung SL, Analog-Digital-Wandler AD und Adressen- und Datenbus ADB als digitalisierte Signalwerte zu der digitalen Auswerteschaltung DAS gelangen. Dadurch kann nun durch Vergleich der ankommenden Signalwerte mit den im Datenspeicher abgelegten Istwerten eine Auswertung der Wechselspannungssignale (50 Hz) erfolgen.

Anschließend wird die Schaltungsanordnung wieder in den Ruhezustand gesetzt, d.h. das Bandpaßfilter BP läßt keine Signale durch. Ebenso ist es möglich, die zuvor eingestellte Mittenfrequenz (50 Hz) des Bandpaßfilters so lange beizubehalten, bis ein anderer Betriebsfall eintritt.

Analog zu dem Fall der ankommenden Belegung erfolgt auch die Einstellung des Bandpaßfilters BP und die Auswertung der Wechselspannungssignale für eine abgehende Belegung.

Hier muß zunächst die Mittenfrequenz des Bandpaßfilters BP auf 425/450 Hz (Wählton) abgestimmt und von der digitalen Aus-

K.-H.Eberspächer -1

werteschaltung DAS erkannt werden, sodann wird das Band-paßtfilter BP zum Durchlassen der Gebührenimpulse auf eine Mittenfrequenz von 16 kHz eingestellt. Nach dem Auslösen der Gesprächsverbindung kann dann wieder in den Ruhezustand übergegangen werden.

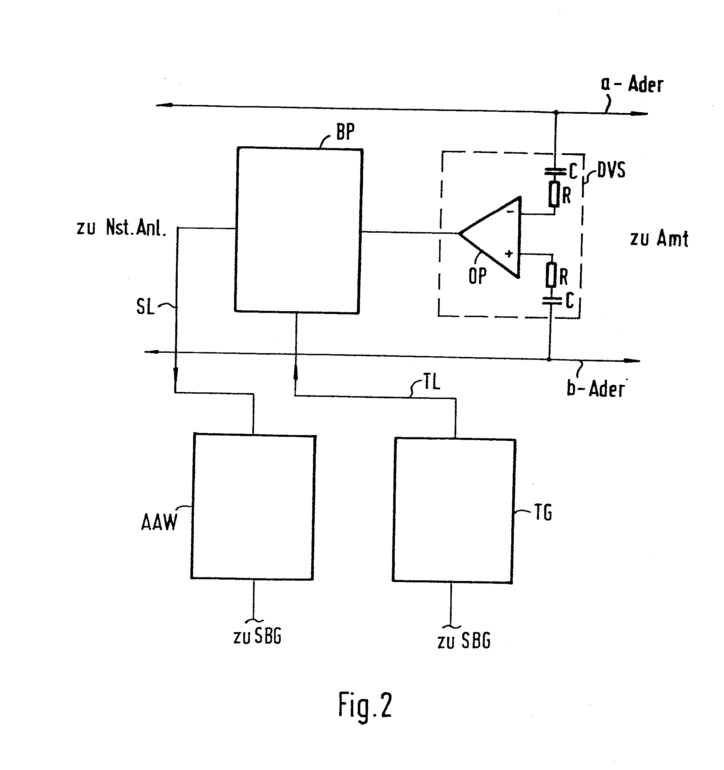

Eine zusätzliche einfache Möglichkeit des Auswertens eines einzigen fest vorgegebenen Wechselspannungssignals (z.B. 50 Hz) wird in der Figur 2 gezeigt. Hierzu ist eine analoge Auswerteschaltung AAW über die Signalleitung SL mit dem getakteten Bandpaßfilter BP verbunden. Die analoge Auswerteschaltung AAW kann z.B. einen Komparator enthalten, der die Bandpaßausgangsspannung mit einem fest vorgegebenen Spannungswert (z.B. für 50 Hz) vergleicht und das Ergebnis an eine hier nicht näher dargestellte Schaltungsbaugruppe SBG weiterleitet. Der Taktgenerator TG, der den Bandpaß BP ansteuert, wird dabei direkt von der Schaltungsbaugruppe SBG eingestellt.

Weiterhin werden induzierte Längsspannungen auf den Amtsadern in vorteilhafter Weise entweder durch die Differenzverstärkerschaltung DVS eliminiert oder durch den getak-teten Bandpaß BP ausgefiltert.

K.-H.Eberspächer -1

Patentansprüche

1. Schaltungsanordnung zum Erkennen und Auswerten von Wechselspannungssignalen auf Amtsadern, insbesondere für Fernsprech-Nebenstellenanlagen mit einer Durchwahlamtsübertragung, dadurch gekennzeichnet, daß ein getaktetes Bandpaßfilter (BP) an die a-Ader und an die b-Ader einer Amtsleitung (AL) angeschlossen ist, daß das Bandpaßfilter (BP) über eine Taktleitung (TL) mit einem programmierbaren Taktgenerator (TG) und über eine Signalleitung (SL) mit einem Analog-Digital- Wandler (AD) verbunden ist, und daß der Analog-Digital- Wandler (AD) und der Taktgenerator (TG) über einen Adressen- und Datenbus (ADB) an eine digitale Auswerteschaltung (DAS) gekoppelt sind.

2. Schaltungsanordnung zum Erkennen und Auswerten von Wechselspannungssignalen auf Amtsadern, insbesondere für Fernsprech-Nebenstellenanlagen mit einer Durchwahlamtsübertragung, dadurch gekennzeichnet, daß ein getaktetes Bandpaßfilter (BP) an die a-Ader und an die b-Ader einer Amtsleitung (AL) angeschlossen ist und daß das Bandpaßfilter (BP) über eine Taktleitung (TL) mit einem

K.-H.Eberspächer -1

programmierbaren Taktgenerator (TG) und über eine Signalleitung (SL) mit einer analogen Auswerteschaltung (AAW)
verbunden ist.

3. Schaltungsanordnung nach Anspruch 1 oder 2, dadurch
gekennzeichnet, daß der Eingang des Bandpaßfilters (BP)
über eine Differenzverstärkerschaltung (DVS) an die Amtsleitung (AL) angeschlossen ist.

- 1/2

0144794

a-Ader

b-Ader

Fig.1

K.-H.Eberspächer 1

0144794

Fig.2

K.-H.Eberspächer-1